# EUROPEAN PATENT SPECIFICATION

(11) **EP 3 795 800 B1**
(45) Date of publication and mention of the grant of the patent: **01.03.2023**
(21) Application number: 20195607.5
(22) Date of filing: 10.09.2020
(51) Int. Cl.: F01D 5/28, F01D 11/12, F01D 11/20, F01D 25/24

(54) **SEALED CMC TURBINE CASE**
ABGEDICHTETES CMC-TURBINENGEHÄUSE
CARTER DE TURBINE ÉTANCHE EN CMC

(30) Priority: 20.09.2019 US 201962903304 P
(43) Date of publication of application: 24.03.2021
(73) Proprietor: Raytheon Technologies Corporation, Farmington, CT 06032 (US)
(72) Inventor: SUCIU, Gabriel L., Glastonbury, CT 06033 (US)
(74) Representative: Dehns

(56) References cited:
- EP-A1- 3 037 394
- EP-A1- 3 427 843
- WO-A2-2015/069338
- US-A1- 2019 107 003

## Description

### BACKGROUND

The invention relates generally to gas turbine engines and more specifically to configurations of individual turbine stages.

To facilitate high turbine rotor temperatures and shaft speeds in superalloy turbine rotor and stator systems, toward the goal of improving efficiency and increasing combustion power extraction, additional cooling and other mitigating systems have been developed to achieve incremental gains in efficiency with superalloy-based turbines. However, the financial cost as well as the marginal "cost" in cooling air and other efficiency losses inherent in these mitigating systems can approach any marginal efficiency gain achievable with ever-higher turbine temperatures.

As a next-stage technology, ceramic matrix composites (CMCs) are being adopted into certain parts of the engine hot section to overcome these incremental losses. One of the main attractions of CMCs is the potential gain in thermal resistance over the most recent generations of superalloys. But as with any large step-change, a number of other technical issues arise when implementing CMCs into existing systems. One issue that frequently comes up is the porosity of CMCs, so that under increased pressures and temperatures needed for increased turbine efficiency, several components of the combustion fluid can infiltrate an unprotected composite matrix and severely shorten the useful life of CMC components.

EP 3037394 A1 discloses an environmental barrier coating with an abradable coating for ceramic matrix composites.

US 2019/107003 A1 discloses seal geometries for reduced leakage in gas turbines.

### SUMMARY

The invention is a turbine engine outer case ring assembly according to claim 1.

An embodiment of a turbine engine outer case assembly includes a plurality of first outer case ring assemblies arranged axially along a central longitudinal axis to define at least part of a turbine section case. Each of the plurality of first outer case ring assemblies include a substantially circular first main body having a plurality of first porous ceramic matrix composite (CMC) segments, each first segment including an outer mounting side and an inner gas path side. An external sealant layer covers a main gas-facing surface of the inner gas path side, the external sealant layer having at least one coating sufficient to prevent infiltration of working gas into pores of the main body.

An embodiment of a turbine module includes a turbine engine outer case assembly including a plurality of first outer case ring assemblies and a plurality of second outer case ring assemblies, each alternating and centered axially along a longitudinal axis to define at least part of a turbine section case. Each of the axially alternating first and second outer case ring assemblies include a substantially circular main body including a plurality of porous ceramic matrix composite (CMC) segments, each segment including an outer mounting side and an inner gas path side. An external sealant layer covers a main gas-facing surface of the inner gas path side, the external sealant layer comprising at least one coating sufficient to prevent infiltration of working gas into pores of the main body. A plurality of turbine rotors are centered and rotatable about the longitudinal axis, each turbine rotor axially aligned with all of the first outer case ring assemblies or all of the second outer case ring assemblies.

Features of further embodiments are recited in the dependent claims.

### BRIEF DESCRIPTION OF THE DRAWINGS

FIG. 1 is a schematic gas turbine engine.
FIG. 2 is an example axial view of a turbine section assembly.
FIG. 3 is sectional view of the turbine section in FIG. 2.

### DETAILED DESCRIPTION

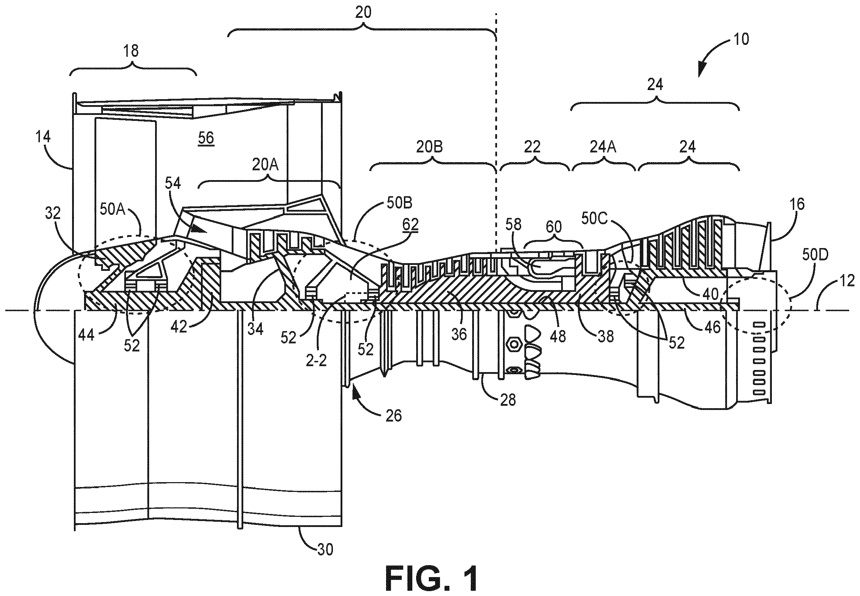

FIG. 1 shows a side elevation cutaway view of gas turbine engine 10 and includes axial centerline 12, upstream airflow inlet 14, downstream airflow exhaust 16, fan section 18, compressor section 20 (with low pressure compressor ("LPC") section 20A and high pressure compressor ("HPC") section 20B), combustor section 22, turbine section 24 (with high pressure turbine ("HPT") section 24A and low pressure turbine ("LPT") section 24B), engine housing 26 (with inner case 28 (e.g., a core case) and outer case 30 (e.g., a fan case)), fan rotor 32, LPC rotor 34, HPC rotor 36, HPT rotor 38, LPT rotor 40, gear train 42, fan shaft 44, low speed shaft 46, high speed shaft 48, bearing compartments 50A, 50B, 50C, and 50D, plurality of bearings 52, core gas path 54, bypass gas path 56, combustion chamber 58, and combustor 60.

Fan section 18, compressor section 20, combustor section 22, and turbine section 24 are arranged sequentially along centerline 12 within engine housing 26. Engine housing 26 includes inner case 28 (e.g., a core case) and outer case 30 (e.g., a fan case). Inner case 28 may house one or more of (or even a portion of) fan section 18, compressor 20, combustor section 22, and turbine section 24 (e.g., an engine core). Outer case 30 may house at least fan section 18. Each of gas turbine engine sections 18, 20A, 20B, 24A and 24B includes respective rotors 32-40. Each of these rotors 32-40 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

Fan rotor 32 is connected to gear train 42, for example, through fan shaft 44. Gear train 42 and LPC rotor 34 are connected to and driven by LPT rotor 40 through low speed shaft 46. Alternatively, LPC rotor 34 may be connected to and driven by gear train 42. The combination of at least LPC rotor 34, LPT rotor 40, and low speed shaft 46 may be referred to as "a low speed spool." HPC rotor 36 is connected to and driven by HPT rotor 38 through high speed shaft 48. The combination of at least HPC rotor 36, HPT rotor 38, and high speed shaft 48 may be referred to as "a high speed spool." Shafts 44-48 are rotatably supported by a plurality of bearings 52, which can be rolling element bearings, thrust bearings, or other types of bearings. Each of these bearings 52 is connected to engine housing 26 by at least one stationary structure such as, for example, an annular support strut.

During operation, air enters gas turbine engine 10 through airflow inlet 14. Air is directed through fan section 18 and is then split into either core gas path 54 or bypass gas path 56. Core gas path 54 flows sequentially through fan section 18, compressor section 20, combustor section 22, and turbine section 24. The air within core gas path 54 may be referred to as "core air." Bypass gas path 56 flows through a duct between inner case 28 and outer case 30. The air within bypass gas path 56 may be referred to as "bypass air."

The core air is compressed by LPC rotor 34 and HPC rotor 36 and directed into combustion chamber 58 of combustor 60 in combustor section 22. Fuel is injected into combustion chamber 58 and mixed with the core air that has been compressed by compressor section 20 to provide a fuel-air mixture. This fuel-air mixture is ignited and combustion products thereof expand and flow through and sequentially cause HPT rotor 38 and LPT rotor 40 to rotate. The rotations of HPT rotor 38 and LPT rotor 40 drive rotation of HPC rotor 36 and LPC rotor 34, respectively and compression of the air received from core gas path 54. The rotation of LPT rotor 40 also drives rotation of fan rotor 32, which propels bypass air through and out of bypass gas path 56.

Some of the main attractions of CMCs are the reduced weight and/or potential gain in thermal resistance over the current and expected advances in superalloys for rotors and stators. But as with any large step-change, a number of other technical issues arise before successfully and cost-effectively implementing CMCs into existing turbine stator systems. One issue with the use of CMCs is its porosity, so that if used untreated or otherwise unprotected under increased pressures and temperatures similar to a pressure vessel - such as in the hot section of a gas turbine engine, several components of the combustion / working fluid can easily infiltrate an unprotected composite matrix and severely shorten the useful life of CMC components.

Nearly all CMCs suitable for use in a hot section (e.g., SiC, carbon / carbon, etc.) have relatively low alpha (thermal expansion) coefficients compared to those of metals. Thus, it becomes desirable to consider, and adapt, structural parts of the hot section to operate as a quasi-static pressure vessel rather than as a highly variable and flexible metallic system that must adapt to temperature variations of 1000° F (538°C) or more throughout every flight cycle. By considering the outer structure as a quasi-static pressure vessel and designing the structural material in ways that can minimize or prevent working gases from infiltrating the CMC, life of the outer CMC ring structures can be increased while also taking advantage of the decreased weight, their thermal resistance and low alpha properties.

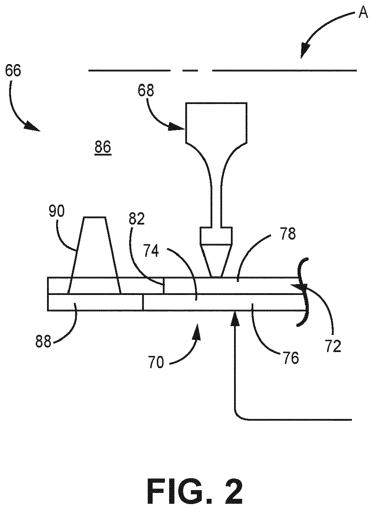

To this end, FIG. 2 shows a selected portion of turbine engine section 66. Depending on the particular engine configuration (i.e., one-spool, two-spool, three-spool), this could be a low-pressure, intermediate-pressure, and/or high-pressure turbine section such as those shown in FIG. 1.

This portion of turbine section 66 includes at least metallic rotor assembly 68 and outer case ring assembly 70 annularly arranged therearound. Assembly 70 includes at least a substantially circular first main body 72 comprising a plurality of first porous (when untreated) ceramic matrix composite (CMC) blade outer air seal (BOAS) segments 74. Each BOAS segment 74 includes outer mounting side 76 and inner gas path side 78. To the end of reducing or eliminating negative effects of this porosity at typical hot section operating temperatures and pressures, at least one external sealant layer 82 covers main gas-facing surface 84 of inner gas path side 78. External sealant layer 82 includes at least one coating sufficient to prevent infiltration of working gas into pores of the main body. In certain embodiments external sealant layer 82 is substantially impermeable to oxidizing gases typically present in the heated combustion / working gas. The sealant layer(s) allow the fixed CMC components to operate as a quasi-static pressure vessel as described above with minimal risk of infiltration and resulting damage.

Turbine section 66 can include sealed stator outer platform segments 88 axially upstream or downstream of BOAS segments 74. In the event that main body 72 makes up stator platforms 88, one or more CMC stator vanes 90 can also extend radially from each of the plurality of stator outer platform segments.

To minimize axial variation in thermal expansion coefficients, it is desired in certain embodiments that both the BOAS and the outer stator platforms are formed from sealed CMC segments such as those described above. To that end, turbine engine outer case assembly 70 can include both a plurality of first outer case ring assemblies arranged axially along a central longitudinal axis A to define at least part of a turbine section case, and a substantially circular second main body comprising a plurality of second porous ceramic matrix composite (CMC) segments.

In the most common configuration, the CMC segments alternate axially between a plurality of blade outer air seal (BOAS) segments and a plurality of stator outer platform segments. CMC segments can further comprise one or more CMC stator vanes extending radially inward from each of the plurality of stator outer platform segments.

Each first and second segment can include an outer mounting side and an inner gas path side. As above, each of the plurality of first outer case ring assemblies includes a substantially circular first main body comprising a plurality of first porous ceramic matrix composite (CMC) segments, each first segment including an outer mounting side and an inner gas path side. A sealant layer covers a main gas-facing surface of the inner gas path side, the sealant layer including at least one external coating sufficient to prevent infiltration of working gas into pores of the main body.

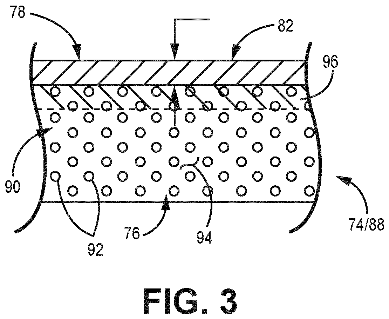

FIG. 3 shows a sectional view of a sealed outer case segment 74 or 88. On a basic level each segment includes CMC substrate 90 with outer side 76 and inner side 78, similar to that seen in FIG. 2. CMC substrate 90 includes one or more types of structural fibers 92 embedded in matrix 94. Structural fibers 92 can include, by way of non-limiting example, one or more of carbon fibers and silicon carbide (SiC) fibers. These may be embedded for example in a carbon or silicon carbide (SiC) matrix 94.

Without surface treatment, the porosity of a CMC substrate is susceptible to infiltration of working gas from core path 54. Some of the combustion byproducts can rapidly wear down the structural materials in the composite, which has hindered broader adoption of more thermal resistant CMC materials. To this end, at least external sealant 82 (also shown in FIG. 2 can be included. And in certain embodiments, the same or a different material, such as an amorphous and/or self-healing glass-like material, can be provided to a minimum depth into substrate 90 segments to provide diffusion layer 96 so that the outer flow path boundary approximates a pressure vessel with minimal expansion under typical conditions.

By way of explanation and enablement, several combinations of CMCs and sealants could be used but not all combinations have been tested for suitability, compatibility, and useful life. It is expected that, generally speaking, the outer case will have the following minimum mechanical and thermal requirements. At a typical turbine flow path pressure of 400-1000 psig (about 2750-6900 kPa) and at least 1500° F (about 825° C), the working fluid will not infiltrate substrate 90 due to sealant layer 82 and/or diffusion layer 96. The fibers will have a density and orientation so that a tensile strength of at least 300 ksi (about 207 MPa), and in some embodiments up to or exceeding 500 ksi (about 345 MPa) on a constant basis. And toward the goal of approximating a pressure vessel, the above design conditions will not result in more than 2% radial deflection of the main body or outer ring assembly relative to ambient conditions.

In certain embodiments, an active clearance control (ACC) system, adapted particularly to minimize the efficiency losses due to e.g., excess weight and cooled air usage, can be disposed radially outward of at least one of the plurality of first or second outer case ring assemblies. One such example, using a clearance control ring not directly tied to the engine case or seal supports, is described in U.S. Patent Application Publication 2018/0320542 A1 (Serial No. 15/589,009) by Suciu et al.

## Claims

1. A turbine engine outer case ring assembly (70) comprising:
a substantially circular first main body (72) comprising a plurality of first porous ceramic matrix composite (CMC) segments (74, 88), each first segment (74, 88) including an outer mounting side (76) and an inner gas path side (78); and **characterized by**
an external sealant layer (82) covering a main gas-facing surface (84) of the inner gas path side (78), the external sealant layer (82) comprising at least one coating sufficient to prevent infiltration of working gas into pores of the main body (72).

2. The assembly of claim 1, wherein the plurality of first porous CMC segments (74, 88) comprise a plurality of blade outer air seal (BOAS) segments (74) and/or a plurality of stator outer platform segments (88).

3. The assembly of claim 1 or 2, wherein the plurality of first porous ceramic matrix composite (CMC) segments (74, 88) comprise one or more of carbon fibers and silicon carbide (SiC) fibers (92).

4. The assembly of claim 1, 2 or 3, wherein the plurality of first porous ceramic matrix composite (CMC) segments comprise a silicon carbide (SiC) matrix (94).

5. The assembly of any preceding claim, wherein the external sealant layer (82) comprises an amorphous material.

6. The assembly of any preceding claim, wherein the plurality of first porous CMC segments (74, 88) further comprise one or more CMC stator vanes (90) extending radially from each of the plurality of stator outer platform segments (88).

7. A turbine engine outer case assembly (70) comprising:
a plurality of first outer case ring assemblies according to any preceding claim arranged axially along a central longitudinal axis (A) to define at least part of a turbine section case.

8. The assembly of claim 7, wherein the plurality of first porous CMC segments comprise at least one of a plurality of blade outer air seal (BOAS) segments and a plurality of stator outer platform segments (88).

9. The assembly of any preceding claim, further comprising:
a substantially circular second main body (72) comprising a plurality of second porous ceramic matrix composite (CMC) segments (74, 88), each second segment (74, 88) including an outer mounting side (76) and an inner gas path side (78); and
an external sealant layer (82) covering a main gas-facing surface (84) of the inner gas path side (78), the external sealant layer (82) comprising at least one coating sufficient to prevent infiltration of working gas into pores of the main body (72).

10. The assembly of claim 9, wherein the plurality of second porous CMC segments (74, 88) comprise the other of a plurality of blade outer air seal (BOAS) segments (74) and a plurality of stator outer platform segments (88).

11. A turbine module comprising:
a turbine engine outer case assembly comprising:
a plurality of first outer case ring assemblies and a plurality of second outer case ring assemblies each according to the outer case ring assembly of any of claims 1 to 6, each alternating and centered axially along a longitudinal axis (A) to define at least part of a turbine section case; and
a plurality of turbine rotors (32, 34, 36, 38, 40) centered and rotatable about the longitudinal axis (A), each turbine rotor (32, 34, 36, 38, 40) axially aligned with all of the first outer case ring assemblies or all of the second outer case ring assemblies.

12. The turbine module of claim 11, wherein at least one of the plurality of turbine rotors (32, 34, 36, 38, 40) is metallic, and has a coefficient of thermal expansion greater than a coefficient of thermal expansion of the sealed ceramic matrix composite (CMC) segments (74, 88).

13. The turbine module of claim 11 or 12, further comprising an active clearance control (ACC) system disposed radially outward of at least one of the plurality of first or second outer case ring assemblies (70), wherein, optionally, the ACC system comprises a first mount feature and a second mount feature such that a clearance control ring of the ACC system can move independently of the first and second outer case ring assemblies (70).

14. The turbine module of claim 11, 12 or 13, wherein the plurality of first porous CMC segments (74, 88) comprise at least one of a plurality of blade outer air seal (BOAS) segments (74) and a plurality of stator outer platform segments (88), and the plurality of second porous CMC segments (74, 88) comprise the other of a plurality of blade outer air seal (BOAS) segments (74) and a plurality of stator outer platform segments (88).

15. The turbine module of any of claims 11 to 14, wherein the external sealant layer (82) is configured to withstand a working gas pressure of at least 6900 kPa (1000 psig) at 825° C (1500° F) without infiltration of the working gas into the segments (74, 88) beyond the sealed gas-facing surfaces (84).

## Patentansprüche

1. Außengehäuseringanordnung (70) eines Turbinentriebwerks, umfassend:
einen im Wesentlichen kreisförmigen ersten Hauptkörper (72), der eine Vielzahl von ersten Segmenten (74, 88) aus porösem Keramikmatrixverbundstoff (ceramic matrix composite - CMC) umfasst, wobei jedes erste Segment (74, 88) eine äußere Montageseite (76) und eine innere Gaswegseite (78) beinhaltet; und **gekennzeichnet durch**
eine externe Dichtungsschicht (82), die eine dem Hauptgas zugewandte Oberfläche (84) der inneren Gaswegseite (78) bedeckt, wobei die externe Dichtungsschicht (82) mindestens eine Beschichtung umfasst, die ausreicht, um Eindringen von Arbeitsgas in Poren des Hauptkörpers (72) zu verhindern.

2. Anordnung nach Anspruch 1, wobei die Vielzahl von ersten porösen CMC-Segmenten (74, 88) eine Vielzahl von Segmenten (74) einer äußeren Laufschaufelluftdichtung (blade outer air seal - BOAS) und/oder eine Vielzahl von äußeren Statorplattformsegmenten (88) umfasst.

3. Anordnung nach Anspruch 1 oder 2, wobei die Vielzahl von ersten Segmenten (74, 88) aus porösem Keramikmatrixverbundstoff (CMC) eines oder mehrere von Kohlenstoffasern und Siliziumkarbid- (SiC-)Fasern (92) umfasst.

4. Anordnung nach Anspruch 1, 2 oder 3, wobei die Vielzahl von ersten Segmenten aus porösem Keramikmatrixverbundstoff (CMC) eine Siliziumkarbid- (SiC-)Matrix (94) umfasst.

5. Anordnung nach einem vorhergehenden Anspruch, wobei die externe Dichtungsschicht (82) ein amorphes Material umfasst.

6. Anordnung nach einem vorhergehenden Anspruch, wobei die Vielzahl von ersten porösen CMC-Segmenten (74, 88) ferner eine oder mehrere CMC-Statorleitschaufeln (90) umfasst, die sich radial von jedem aus der Vielzahl von äußeren Statorplattformsegmenten (88) erstrecken.

7. Außengehäuseanordnung (70) eines Turbinentriebwerks, umfassend:
eine Vielzahl von ersten Außengehäuseringanordnungen nach einem vorhergehenden Anspruch, die axial entlang einer zentralen Längsachse (A) angeordnet ist, um mindestens Teil eines Turbinenabschnittsgehäuses zu definieren.

8. Anordnung nach Anspruch 7, wobei die Vielzahl von ersten porösen CMC-Segmenten mindestens eines von einer Vielzahl von Segmenten einer äußeren Laufschaufelluftdichtung (BOAS) und einer Vielzahl von äußeren Statorplattformsegmenten (88) umfasst.

9. Anordnung nach einem vorhergehenden Anspruch, ferner umfassend:
einen im Wesentlichen kreisförmigen zweiten Hauptkörper (72), der eine Vielzahl von zweiten Segmenten (74, 88) aus porösem Keramikmatrixverbundstoff (CMC) umfasst, wobei jedes zweite Segment (74, 88) eine äußere Montageseite (76) und eine innere Gaswegseite (78) beinhaltet; und
eine externe Dichtungsschicht (82), die eine dem Hauptgas zugewandte Oberfläche (84) der inneren Gaswegseite (78) bedeckt, wobei die externe Dichtungsschicht (82) mindestens eine Beschichtung umfasst, die ausreicht, um Eindringen von Arbeitsgas in Poren des Hauptkörpers (72) zu verhindern.

10. Anordnung nach Anspruch 9, wobei die Vielzahl von zweiten porösen CMC-Segmenten (74, 88) das andere von einer Vielzahl von Segmenten (74) einer äußeren Laufschaufelluftdichtung (BOAS) und einer Vielzahl von äußeren Statorplattformsegmenten (88) umfasst.

11. Turbinenmodul, umfassend:
eine Außengehäuseanordnung eines Turbinentriebwerks, umfassend:
eine Vielzahl von ersten Außengehäuseringanordnungen und eine Vielzahl von zweiten Außengehäuseringanordnungen jeweils gemäß der Außengehäuseringanordnung nach einem der Ansprüche 1 bis 6, jeweils alternierend und axial entlang einer Längsachse (A) zentriert, um mindestens Teil eines Turbinenabschnittgehäuses zu definieren; und
eine Vielzahl von Turbinenrotoren (32, 34, 36, 38, 40), die um die Längsachse (A) zentriert und drehbar ist, wobei jeder Turbinenrotor (32, 34, 36, 38, 40) axial mit allen der ersten Außengehäuseringanordnungen oder allen der zweiten Außengehäuseringanordnungen ausgerichtet ist.

12. Turbinenmodul nach Anspruch 11, wobei mindestens einer aus der Vielzahl von Turbinenrotoren (32, 34, 36, 38, 40) metallisch ist und einen Wärmeausdehnungskoeffizienten aufweist, der größer als ein Wärmeausdehnungskoeffizient der abgedichteten Segmente (74, 88) aus Keramikmatrixverbundstoff (CMC) ist.

13. Turbinenmodul nach Anspruch 11 oder 12, ferner umfassend ein System zur aktiven Abstandsregelung (ACC), das radial außerhalb von mindestens einer aus der Vielzahl von ersten oder zweiten Außengehäuseringanordnungen (70) angeordnet ist, wobei optional das ACC-System ein erstes Montagemerkmal und ein zweites Montagemerkmal umfasst, sodass sich ein Abstandskontrollring des ACC-Systems unabhängig von der ersten und der zweiten Außengehäuseringanordnung (70) bewegen kann.

14. Turbinenmodul nach Anspruch 11, 12 oder 13, wobei die Vielzahl von ersten porösen CMC-Segmenten (74, 88) mindestens eines von einer Vielzahl von Segmenten (74) einer äußeren Laufschaufelluftdichtung (BOAS) und einer Vielzahl von äußeren Statorplattformsegmenten (88) umfasst und die Vielzahl von zweiten porösen CMC-Segmenten (74, 88) das andere von einer Vielzahl von Segmenten (74) einer äußeren Laufschaufelluftdichtung (BOAS) und einer Vielzahl von äußeren Statorplattformsegmenten (88) umfasst.

15. Turbinenmodul nach einem der Ansprüche 11 bis 14, wobei die externe Dichtungsschicht (82) konfiguriert ist, um einem Arbeitsgasdruck von mindestens 6900 kPa (1000 psig) bei 825 °C (1500 °F) ohne Eindringen des Arbeitsgases in die Segmente (74, 88) über die abgedichteten, dem Gas zugewandten Oberflächen (84) hinaus standzuhalten.

## Revendications

1. Ensemble bague de carter externe de moteur à turbine (70) comprenant :
un premier corps principal sensiblement circulaire (72) comprenant une pluralité de premiers segments en composites à matrice céramique (CMC) poreux (74, 88), chaque premier segment (74, 88) comportant un côté de montage externe (76) et un côté de trajet de gaz interne (78) ; et **caractérisé par**
une couche d'étanchéité externe (82) recouvrant une surface principale faisant face au gaz (84) du côté de trajet de gaz interne (78), la couche d'étanchéité externe (82) comprenant au moins un revêtement suffisant pour empêcher l'infiltration de gaz de travail dans les pores du corps principal (72).

2. Ensemble selon la revendication 1, dans lequel la pluralité de premiers segments en CMC poreux (74, 88) comprennent une pluralité de segments d'étanchéité à l'air externe de pale (BOAS) (74) et/ou une pluralité de segments de plateforme externe de stator (88).

3. Ensemble selon la revendication 1 ou 2, dans lequel la pluralité de premiers segments en composites à matrice céramique (CMC) poreux (74, 88) comprennent une ou plusieurs fibres de carbone et fibres de carbure de silicium (SiC) (92).

4. Ensemble selon la revendication 1, 2 ou 3, dans lequel la pluralité de premiers segments composites à matrice céramique (CMC) poreux comprennent une matrice de carbure de silicium (SiC) (94).

5. Ensemble selon une quelconque revendication précédente, dans lequel la couche d'étanchéité externe (82) comprend un matériau amorphe.

6. Ensemble selon une quelconque revendication précédente, dans lequel la pluralité de premiers segments en CMC poreux (74, 88) comprennent en outre une ou plusieurs aubes de stator en CMC (90) s'étendant radialement depuis chacun de la pluralité de segments de plateforme externe de stator (88).

7. Ensemble carter externe de moteur à turbine (70) comprenant :
une pluralité de premiers ensembles bagues de carter externe selon une quelconque revendication précédente agencés axialement le long d'un axe longitudinal central (A) pour définir au moins une partie d'un carter de section de turbine.

8. Ensemble selon la revendication 7, dans lequel la pluralité de premiers segments en CMC poreux comprennent au moins l'une d'une pluralité de segments d'étanchéité à l'air externe de pale (BOAS) et une pluralité de segments de plateforme externe de stator (88).

9. Ensemble selon une quelconque revendication précédente, comprenant en outre :
un second corps principal sensiblement circulaire (72) comprenant une pluralité de seconds segments en composites à matrice céramique (CMC) poreux (74, 88), chaque second segment (74, 88) comportant un côté de montage externe (76) et un côté de trajet de gaz interne (78) ; et
une couche d'étanchéité externe (82) recouvrant une surface principale faisant face au gaz (84) du côté de trajet de gaz interne (78), la couche d'étanchéité externe (82) comprenant au moins un revêtement suffisant pour empêcher l'infiltration de gaz de travail dans les pores du corps principal (72).

10. Ensemble selon la revendication 9, dans lequel la pluralité de seconds segments en CMC poreux (74, 88) comprennent l'autre d'une pluralité de segments d'étanchéité à l'air externe de pale (BOAS) (74) et d'une pluralité de segments de plateforme externe de stator (88).

11. Module de turbine comprenant :
un ensemble carter externe de moteur à turbine comprenant :
une pluralité de premiers ensembles bagues de carter externe et une pluralité de seconds ensembles bagues de carter externe, chacune selon l'ensemble bague de carter externe selon l'une quelconque des revendications 1 à 6, chacune alternant et étant centrée axialement le long d'un axe longitudinal (A) pour définir au moins une partie d'un carter de section de turbine ; et
une pluralité de rotors de turbine (32, 34, 36, 38, 40) centrés et pouvant tourner autour de l'axe longitudinal (A), chaque rotor de turbine (32, 34, 36, 38, 40) étant aligné axialement avec l'ensemble des premiers ensembles bagues de carter externe ou l'ensemble des seconds ensembles bagues de carter externe.

12. Module de turbine selon la revendication 11, dans lequel au moins l'un de la pluralité de rotors de turbine (32, 34, 36, 38, 40) est métallique, et a un coefficient de dilatation thermique supérieur à un coefficient de dilatation thermique des segments en composites à matrice céramique (CMC) scellés (74, 88) .

13. Module de turbine selon la revendication 11 ou 12, comprenant en outre un système de commande de jeu actif (ACC) disposé radialement vers l'extérieur d'au moins l'un de la pluralité de premiers ou seconds ensembles bagues de carter externe (70), dans lequel, éventuellement, le système ACC comprend un premier élément de montage et un second élément de montage de sorte qu'une bague de commande de jeu du système ACC peut se déplacer indépendamment des premier et second ensembles bague de carter externe (70).

14. Module de turbine selon la revendication 11, 12 ou 13, dans lequel la pluralité de premiers segments en CMC poreux (74, 88) comprennent au moins l'une d'une pluralité de segments de joint d'étanchéité à l'air extérieur de pale (BOAS) (74) et d'une pluralité de segments de plateforme externe de stator (88) et la pluralité de seconds segments en CMC poreux (74, 88) comprennent l'autre d'une pluralité de segments de joint d'étanchéité à l'air extérieur de pale (BOAS) (74) et d'une pluralité de segments de plateforme externe de stator (88).

15. Module de turbine selon l'une quelconque des revendications 11 à 14, dans lequel la couche d'étanchéité externe (82) est configurée pour résister à une pression de gaz de travail d'au moins 6 900 kPa (1 000 psig) à 825 °C (1 500 °F) sans infiltration du gaz de travail dans les segments (74, 88) au-delà des surfaces étanches faisant face au gaz (84).
